# EUROPEAN PATENT APPLICATION

(11) **EP 4 404 605 A1**
(43) Date of publication of application: **24.07.2024**
(21) Application number: 23152937.1
(22) Date of filing: 23.01.2023
(51) Int. Cl.: H04W 12/04

(54) **METHOD FOR UE PARAMETER UPDATE**

(71) Applicant: Nokia Technologies Oy, 02610 Espoo (FI)
(72) Inventor: MAVUREDDI DHANASEKARAN, Ranganathan, Munich (DE)
(74) Representative: Nokia EPO representatives

(57) **Abstract**

An apparatus comprising means for obtaining a subscription permanent identifier for said apparatus in a primary authentication process; means for obtaining a root session key; means for generating an Authentication and Key Management for Applications (AKMA) key based on said root session key; means for generating a temporary identifier for the AKMA key at least partly based on a first routing indicator value obtained from a Unified Data Management (UDM) function; means for initiating, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

## Description

### TECHNICAL FIELD

The present invention relates to an update of user equipment parameters and related authentication keys.

### BACKGROUND

New security features have been introduced in 5G to provide further security to the 5G Core interfaces. This involves introduction of new Network Functions (NFs) including, inter alia, a Unified Data Management (UDM) function and Authentication Server Function (AUSF). The AUSF is mainly used for authentication processes, while the UDM manages the user data for all other process.

One of the new security features is called Authentication and Key Management for Applications (AKMA). AKMA enables applications to utilize the authentication of the UE (User Equipment) performed by the core network for further authentication and authorization of an application. From the root key K_{AUSF} provided by the AUSF, an AKMA specific key K_{AKMA} is derived. To secure individual applications, an application function (AF) specific key K_{AF} is derived from the K_{AKMA}. Each of these keys is shared with the mobile equipment (ME) and the corresponding network function AUSF, AKMA Anchor Function (AAnF), and AF.

However, there may arise situations, where the keys stored in the UE and the AAnF are not synchronized with each other. One of such situations may occur upon a UE parameter update (UPU) procedure, where the UDM initiates the procedure for updating the Routing Indicator used as a part of the AKMA context. The asynchronization of the keys between the UE and the AAnF leads to a situation, where the UE cannot establish an application session to a new application function (AF).

### SUMMARY

Now, an improved method and technical equipment implementing the method has been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising means for obtaining a subscription permanent identifier for said apparatus in a primary authentication process; means for obtaining a root session key; means for generating an Authentication and Key Management for Applications (AKMA) key based on said root session key; means for generating a temporary identifier for the AKMA key at least partly based on a first routing indicator value obtained from a Unified Data Management (UDM) function; and means for initiating, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

According to an embodiment, the apparatus comprises means for setting an AKMA context used in the apparatus as invalid prior to initiating the re-registration process.

According to an embodiment, the apparatus comprises means for deleting the AKMA key and the temporary identifier for the AKMA key from the apparatus prior to initiating the re-registration process.

According to an embodiment, said apparatus is a User Equipment compliant with a mobile communication system.

According to an embodiment, the apparatus comprises a mobile equipment (ME) functionality and a universal integrated circuit card (UICC) for the insertion of at least one (U)SIM card.

An apparatus according to a second aspect comprises at least one processor and at least one memory, said at least one memory stored with computer program code thereon, the at least one memory and the computer program code configured to, with the at least one processor, cause the apparatus at least to perform: obtain a subscription permanent identifier for said apparatus in a primary authentication process; means for obtaining a root session key; generate an Authentication and Key Management for Applications (AKMA) key based on said root session key; generate a temporary identifier for the AKMA key at least partly based on a first routing indicator value obtained from a Unified Data Management (UDM) function; and initiate, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

A method according to a third aspect comprises obtaining, by a terminal apparatus, a subscription permanent identifier for said apparatus in a primary authentication process; obtaining a root session key; generating an Authentication and Key Management for Applications (AKMA) key based on said root session key; generating a temporary identifier for the AKMA key at least partly based on a first routing indicator value obtained from a Unified Data Management (UDM) function; and initiating, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a simplified example of network architecture wherein the embodiments may be applied;
Fig. 2 illustrates Authentication and Key Management for Applications (AKMA) key hierarchy;
Fig. 3 shows an overview of some AKMA procedures following a primary authentication of a UE;
Fig. 4 shows a signalling chart for UE parameter update (UPU) via UDM Control Plane Procedure;
Fig. 5 shows an example of an error situation caused by the UPU procedure for the AKMA procedures;
Fig. 6 shows a flow chart for carrying out a UE parameter update procedure in a terminal apparatus according to an embodiment;
Fig. 7 shows an exemplified signalling chart for carrying out a UE parameter update procedure according to various embodiments; and
Fig. 8 shows a schematic block diagram of an apparatus for incorporating the embodiments.

### DETAILED DESCRIPTON OF SOME EXAMPLE EMBODIMENTS

The following describes in further detail suitable apparatus and possible mechanisms for carrying out an update of user equipment parameters and related authentication keys. While the following focuses on 5G networks, the embodiments as described further below are by no means limited to be implemented in said networks only, but they are applicable in any network and user equipment supporting the AKMA procedures or equivalent functionalities.

In the following, different exemplifying embodiments will be described using, as an example of a network architecture to which the embodiments may be applied, a radio access architecture based on Long Term Evolution Advanced (LTE Advanced, LTE-A) or new radio (NR, 5G), or beyond 5G, e.g., 6G, together with applicable core network architectures without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet protocol multimedia subsystems (IMS) or any combination thereof.

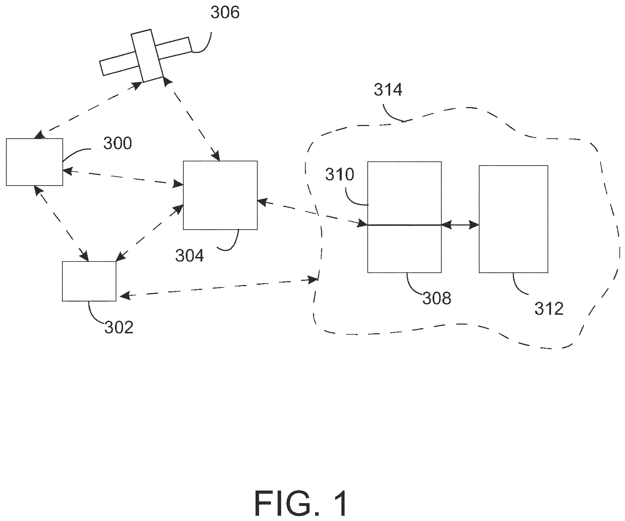

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1. The embodiments are not, however, restricted to the system given as an example but a person skilled in the art may apply the solution to other communication systems provided with necessary properties.

The example of Figure 1 shows a part of an exemplifying radio access network.

Figure 1 shows user devices 300 and 302 configured to be in a wireless connection on one or more communication channels in a cell with an access node (such as (e/g)NodeB or a base transceiver station (BTS)) 304 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node (such as Integrated Access and Backhaul (IAB) node), host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is or comprises a computing device configured to control the radio resources of communication system it is coupled to. The NodeB may also be referred to as a base station, an access point, an access node or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of User Equipment (UEs) to external packet data networks, or mobile management entity (MME), etc. The CN may comprise network entities or nodes that may be referred to management entities. Examples of the network entities comprise at least an Access and Mobility Management Function (AMF).

In 5G NR, the User Plane Function (UPF) may be used to separate the control plane and the user plane functions. Therein, the Packet Gateway (PGW) control and user plane functions may be decoupled, whereby the data forwarding component (PGW-U) may be decentralized, while the PGW-related signalling (PGW-C) may remain in the core. This allows packet processing and traffic aggregation to be performed closer to the network edge, increasing bandwidth efficiencies while reducing network traffic.

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an loT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

The concept of a user equipment (UE) may be used in networks defined in 3GPP standards for logically separating a mobile equipment (ME) and a universal integrated circuit card (UICC) for the insertion of the (U)SIM card, which together form the UE.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT (Radio Access Technology) operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 1 by "cloud" 314). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head (RRH) or remote radio unit (RRU), radio unit (RU) or base station comprising radio parts. It is also possible that node operations will be distributed among a plurality of servers, nodes or hosts. Application of cloudRAN architecture enables RAN real time functions being carried out at the RAN side (e.g. in a distributed unit, DU) and non-real time functions being carried out in a centralized manner (e.g. in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (e/gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/ aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs (High Altitude Platform Stations). Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states are controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ (Hybrid Automatic Repeat reQuest) feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

New security features introduced in 5G provide further security to the PLMN 5G Core interfaces, which may comprise various Network Functions (NFs) using a Service Based Architecture (SBA) interface or an end-to-end interface between the UE and a Unified Data Management (UDM) function. The duties of the Home Subscriber Server (HSS) in 4G/LTE have been split into two different services in 5G, i.e. UDM and Authentication Server Function (AUSF). The AUSF is mainly used for authentication processes, while the UDM manages the user data for all other process.

When a UE registers with the core network for the first time, the network performs a primary authentication of the UE. Only after the successful primary authentication of the UE, the UE is authorized for additional network services. 5G-AKA (5G Authentication and Key Agreement) and EAP-AKA' (Extensible Authentication Protocol Authentication and Key Agreement prime) protocols have been specified for primary authentication, both of which can be executed over 3GPP access and non-3GPP access. In the primary authentication, the subscription credentials and the shared secret stored in the USIM of the UE and the same stored in the UDM of the operator network is verified. In 5G, the subscription permanent identifier SUPI is encrypted and sent to the UDM/LTDR (Unified Data Repository) as a concealed subscription permanent identifier (SUCI). At the end of a successful primary authentication, the UE is admitted to network and the connection is secured using the derived session keys.

The AUSF manages the UE authentication using the SUCI or the SUPI and derives the root session key K_{AUSF}. The AUSF stores the root session key K_{AUSF} and further keys are derived, both by the UE and the network, from this key. Since the key K_{AUSF} is available at the AUSF and the UE, the key may be used to generate further keys that could be bootstrapped to secure different applications.

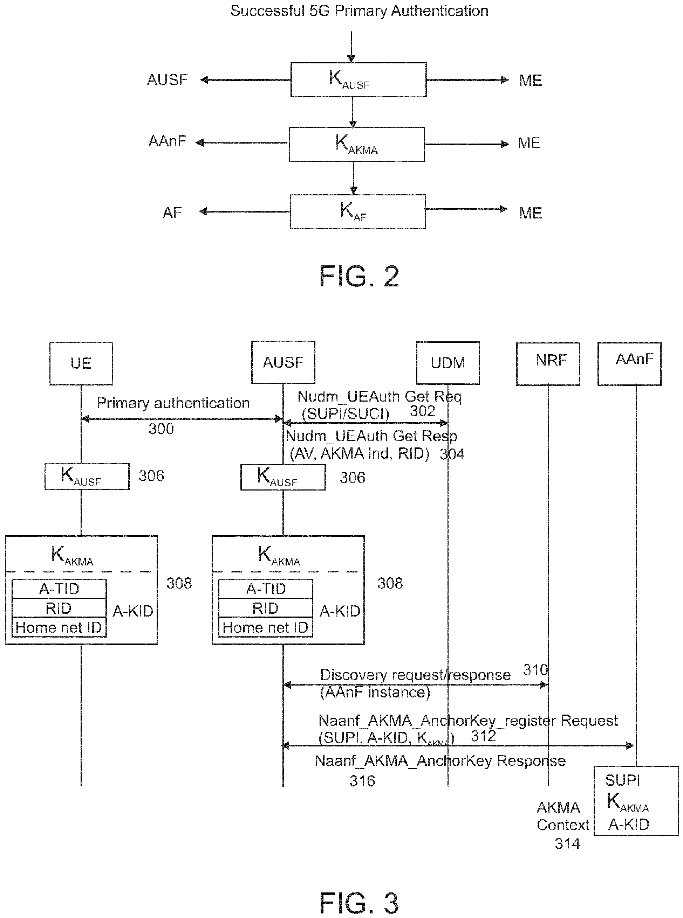

One of the new security features is called Authentication and Key Management for Applications (AKMA). AKMA enables applications to utilize the authentication of the UE performed by the core network for further authentication and authorization of an application, as well as to reset and provide the necessary application security keys to the UE. Thus, from the key K_{AUSF}, an AKMA specific key K_{AKMA} is derived. To secure individual applications, an application function (AF) specific key K_{AF} is derived from the K_{AKMA}, as shown in Figure 2 illustrating AKMA key hierarchy as specified in TS 33.535. Each of these keys is shared with the mobile equipment (ME) and the corresponding network function (AUSF, AAnF, AF).

A new logical entity, AKMA Anchor Function (AAnF), has been introduced to support the AKMA feature. From the K_{AUSF}, the AUSF generates AKMA key K_{AKMA} and sends it to the AAnF. When UE tries to connect to an Application Function (AF) in an application server, the UE provides the AKMA temporary identifier to the application server. Based on this temporary identifier, the application server comprising the AF interacts with the AAnF to receive the specific session key K_{AF} and UE identifier. The AF may use the received session key K_{AF} as such or derive further keys based on the session key K_{AF} to secure the communication between the UE and the application server.

It is noted that the Application Function (AF) may reside within the 5G Core Network (5GC) (a.k.a. trusted AF), or the AF may reside outside the 5GC (a.k.a. untrusted AF), wherein the AF interacts with the AAnF via a Network Exposure Function (NEF).

Figure 3 shows an overview of some AKMA procedures following the primary authentication of the UE. As a part of the primary authentication (300), the AUSF provides the SUCI/SUPI to UDM (302). In the response, the UDM provides an authentication vector (AV), an AKMA identifier and a Routing Identifier (RID) (304). The AKMA key K_{AKMA} is derived from the root key K_{AUSF} both at the UE and the AUSF (306). Correspondingly, a AKMA Key Identifier A-KID is also generated at the UE and AUSF (308), wherein the A-KID comprises at least an AKMA temporary UE Identifier (A-TID), the Routing Identifier (RID) and a home network identifier of the UE. A-TID is used, besides for authentication, also for following new sessions between the UE and the AF.

The communication between the AUSF, NRF (Network Repository Function) and the AAnF is carried out as Service Based Architecture (SBA) procedures. The AUSF requests the correct AAnF instance from the NRF (310). The AUSF then provides (312) the AAnF with SUPI, A-KID and K_{AKMA}, whereupon the AAnF uses these subscription credentials and shared secrets to create an AKMA context for the UE (314). This is then acknowledged to the AUSF (316).

For a more detailed description of the AKMA and its related procedures, a reference is made to the specification 3GPP TS 33.535.

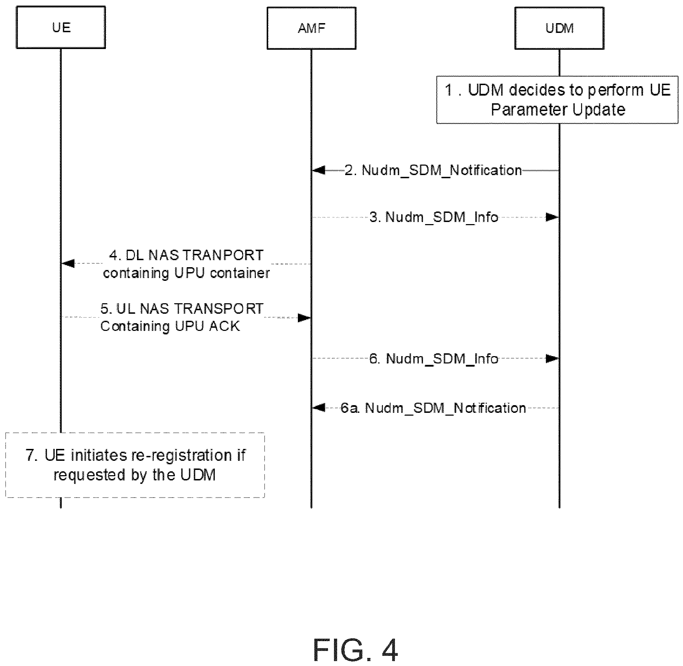

The 5G system (5GS) architecture is described in the specification 3GPP TS 23.501. 3GPP TS 23.502, in turn, describes a great variety of procedures and Network Function Services for 5GS. One of the procedures is a UE parameter update (UPU) via UDM Control Plane Procedure described in clause 4.20.2. The UPU procedure, as described therein, is illustrated in Figure 4 and copied here as follows:
1. UDM decides to perform UE parameter update.
2. From UDM to the AMF: The UDM notifies the changes of the information related to the UE to the affected AMF by the means of invoking Nudm_SDM_Notification service operation. The Nudm_SDM_Notification service operation contains the UDM Update Data that needs to be delivered transparently to the UE over NAS within the Access and Mobility Subscription data. The UDM Update Data includes:
   - The updated parameters to be delivered to the UE (see clause 4.20.1 for parameters possible to deliver).
   - whether the UE needs to send an ack to the UDM.
   - whether the UE needs to re-register after updating the data.
   If the UE parameter update is performed due to "Routing Indicator update data" and the updated Routing Indicator value is not supported by the UDM where the AMF is currently registered, the UDM shall request the UE to re-register after updating the data.
3. From AMF to UDM: If AMF determines that the UE is not reachable, then AMF invokes the Nudm_SDM_Info service operation to UDM indicating that the transmission of UE Parameters Update data is not successful. The UDM considers the procedure as UE Parameters Update procedure as pending and subsequent steps from 4-7 are skipped.
4. From AMF to the UE: the AMF sends a DL NAS TRANSPORT message to the served UE. The AMF includes in the DL NAS TRANSPORT message the transparent container received from the UDM.
   The UE verifies based on mechanisms defined in TS 33.501 that the UDM Update Data is provided by HPLMN, SNPN, or CH; and:
   - If the security check on the UDM Update Data is successful, as defined in TS 33.501 the UE either stores the information and uses those parameters from that point onwards, or forwards the information to the USIM; and
   - If the security check on the UDM Update Data fails, the UE discards the contents of the UDM Update Data.
5. The UE to the AMF: If the UE has verified that the UDM Update Data is provided by HPLMN, SNPN, or CH and the UDM has requested the UE to send an ack to the UDM, the UE sends an UL NAS TRANSPORT message to the serving AMF with a transparent container including the UE acknowledgement.
6. The AMF to the UDM: If the AMF receives an UL NAS TRANSPORT message with a transparent container carrying a UE acknowledgement from the UE, the AMF sends a Nudm_SDM_Info request message including the transparent container to the UDM.
6a. If the UE parameter update is performed due to "Routing Indicator update data", the updated Routing Indicator value is also supported by the UDM where the AMF is currently registered and the UDM requests the UE to send an ack but does not request the UE to re-register, then upon reception of the transparent container indicating the acknowledgement of successful reception, the UDM shall trigger a Nudm_SDM_Notification service operation to update the UE Context in the AMF with the updated Routing Indicator Data (e.g. to avoid transmitting an outdated Routing Indicator on UE context transfer to another AMF).
   The UDM shall also notify other NFs registered in UDM (i.e., SMF and SMSF) about the update of the Routing Indicator value assigned to the SUPI using the Nudm_SDM_Notification service operation.
7. If the UDM has requested the UE to re-register, the UE waits until it goes back to RRC idle and initiates a Registration procedure as defined in TS 24.501.

On the other hand, within the UE, the Mobile Equipment (ME) may receive a REFRESH command from the universal integrated circuit card (UICC), wherein the REG bit of the UE parameters update header in the UE parameters update transparent container information element is set to "re-registration requested", as defined in 3GPP 24.501. The UICC issues the REFRESH command, for example, when the Routing Indicator is changed.

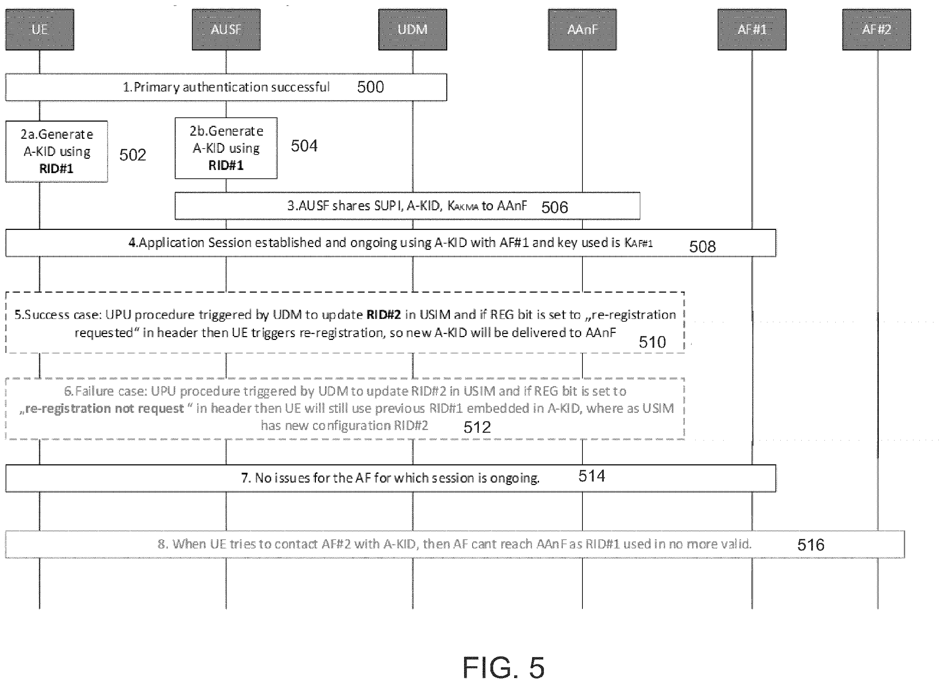

However, in terms of the AKMA procedures, this may lead to problems, which are illustrated in the signalling chart of Figure 5.

Therein, the primary authentication (500), where the subscription credentials and the shared secret stored in the USIM of the UE are verified against those stored in the UDM, is successful.

The root session key K_{AUSF} is generated in both AUSF and UE, and the AKMA key K_{AKMA} is derived from the key K_{AUSF}. The AKMA Key ID A-KID is also generated at the UE and the AUSF using the current Routing Indicator RID#1 (502, 504).

The AUSF shares the subscription permanent identifier SUPI, A-KID and K_{AKMA} to the AKMA Anchor Function AAnF (506).

An application session is then established with an application AF#1 (508), for which an application specific key K_{AF#1} is derived from the K_{AKMA}, whereafter a session is ongoing using A-KID with AF#1. AKMA context is maintained in the AAnF.

The UPU procedure performed due to "Routing Indicator update data", if carried out in this stage, may result in two different outcomes, depending on whether the UE is requested to re-register after updating the data or not. Thus, the UPU procedure is triggered by UDM to update to use a new Routing Indicator RID#2 in the USIM of the UE.

If the UDM sends the REG bit of the UE parameters update header in the UE parameters update transparent container IE as set to "re-registration requested" (510), then after the new RID#2 has been updated in the USIM, the UICC of the UE will send a REFRESH message to the ME. The Re-registration is then triggered from the ME and the AKMA context will be updated with new A-KID, thus resulting in a successful UPU procedure and the application session established with the application AF#1 may continue without problems (514).

However, if the REG bit of the UE parameters update header is set to "re-registration not requested" (512), the ME and thus the UE will still use the previous RID#1 embedded in A-KID, whereas the USIM has updated to the new configuration RID#2. Now, if the UE tries to establish a session with a second application AF#2 (516), the AF#2 cannot communicate with a right AAnF, because the A-KID in the UE and the AAnF are outdated.

In the following, an enhanced method for carrying out a UE parameter update will be described in more detail, in accordance with various embodiments.

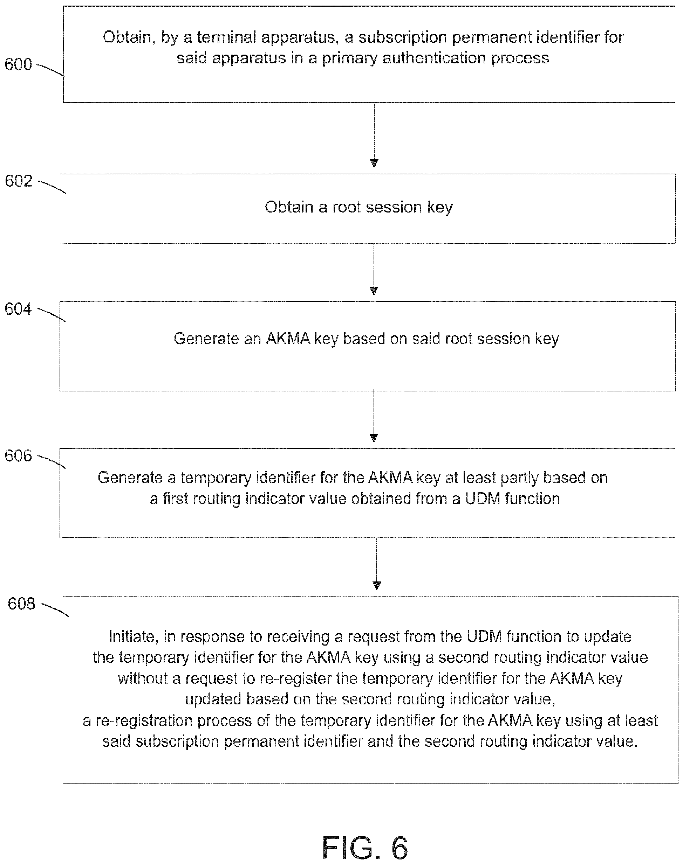

The method is disclosed in flow chart of Figure 6 as reflecting the operation of an apparatus, such as a user equipment (UE), wherein the method comprises obtaining (600) a subscription permanent identifier for said apparatus in a primary authentication process; obtaining (602) a root session key; generating (604) an Authentication and Key Management for Applications (AKMA) key based on said root session key; generating (606) a temporary identifier for the AKMA key at least partly based on a first routing indicator value obtained from a Unified Data Management (UDM) function; and initiating (608), in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

Thus, in the procedure, the terminal apparatus, such as the UE, is configured to autonomously initiate the re-registration of the AKMA Key ID A-KID used as the temporary identifier for AKMA in response to receiving a request from the UDM function to update the A-KID using a second routing indicator value RID #2, where the request indicates that no re-registration of the updated A-KID is required. For example, the REG bit of the UE parameters update header may be set to "re-registration not requested". Consequently, when the UPU procedure involves a routing indicator value to be updated and an indication that no re-registration of the updated A-KID is required, the UE initiates the re-registration process of the updated A-KID, even if not requested by the UDM, thereby avoiding the possible asynchronization of the A-KID between the UE and the AAnF.

According to an embodiment, the method comprises setting an AKMA context used in the apparatus as invalid prior to initiating the re-registration process.

Thus, in response to receiving a request from the UDM function to update the A-KID using a second routing indicator value RID #2, where the request indicates that no re-registration of the updated A-KID is required, the UE may be configured to set the AKMA context as invalid. For example, the non-access stratum (NAS) layer of the UE may be configured to send a request to an upper layer or an application layer to mark the current AKMA context as invalid. The upper layer will not request the AF with session establishment request with outdated A-KID in Ua* interface, i.e. the interface between the UE and the AF, which is unspecified in 3GPP, but rather left open for the application-specific development.

According to an embodiment, the method comprises deleting the AKMA key and the temporary identifier for the AKMA key from the apparatus prior to initiating the re-registration process.

As another option, in response to receiving a request from the UDM function to update the A-KID using a second routing indicator value RID #2, where the request indicates that no re-registration of the updated A-KID is required, the UE may be configured to delete K_{AKMA} and A-KID. For example, the NAS layer may be configured to request the upper layer to delete the AKMA context containing K_{AKMA} and A-KID and to trigger a re-registration request. Thus, even when the UDM has not requested for re-registration, the UE may be configured to trigger the re-registration mandatorily always for an RID change in the USIM.

In both cases, UE will delete the 5G-GUTI (5G Global Unique Temporary Identifier) allocated by the AMF as a temporary identity from the NAS layer and trigger a re-registration with SUCI (with updated RID).

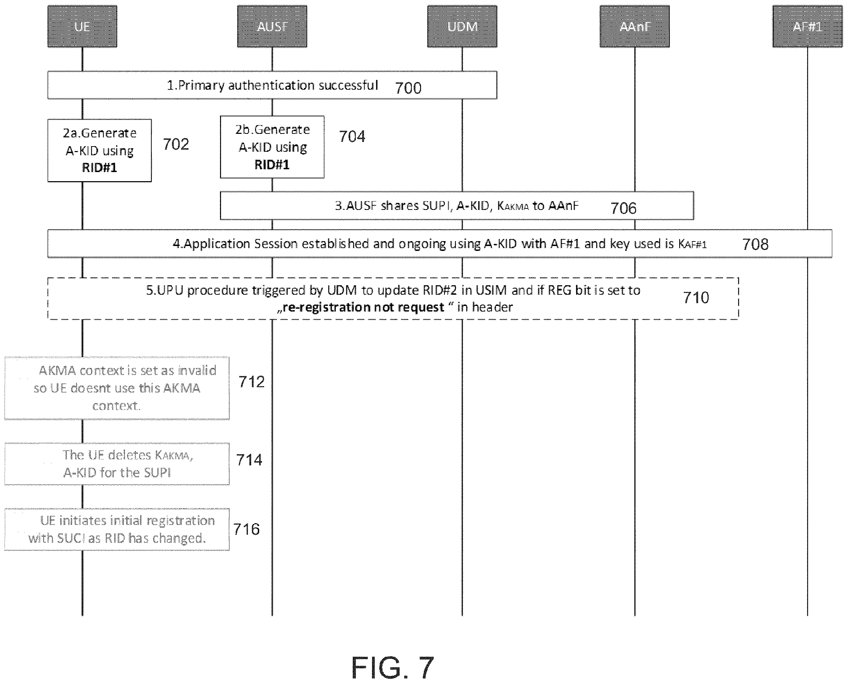

The signaling chart of Figure 7 illustrates the method and some of the embodiments. Therein, the steps 700 - 708 and 710 are equal to the steps 500 - 508 and 512 of Figure 5, correspondingly. Thus, the UPU procedure is triggered by the UDM to update to a new Routing Indicator RID#2 in the USIM of the UE, where the REG bit of the UE parameters update header is set to "re-registration not requested" (710).

Now the UE has at least two options to respond. The UE may set its AKMA context as invalid (712), whereupon the UE initiates a re-registration process of A-KID using at least the subscription concealed identifier (SUCI) and the second routing indicator value (RID#2) (716). As an alternative to setting the AKMA context invalid, the UE may delete K_{AKMA} and A-KID (714), which also leads to the UE initiating the re-registration process of A-KID using at least the subscription permanent identifier (SUCI) and the second routing indicator value (RID#2) (716).

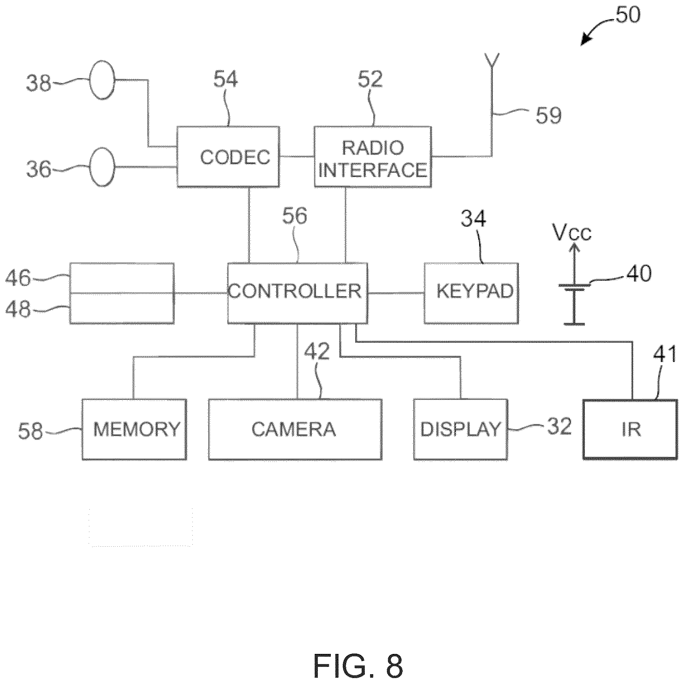

Figure 8 shows a schematic block diagram of an exemplary apparatus or electronic device 50, which may incorporate the arrangement according to the embodiments.

The electronic device 50 may for example be a mobile terminal or user equipment of a wireless communication system. The apparatus 50 may comprise a housing for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a controller 56 or processor for controlling the apparatus 50. The controller 56 may be connected to memory 58 which may store both user data and instructions for implementation on the controller 56. The memory may be random access memory (RAM) and/or read only memory (ROM). The memory may store computer-readable, computer-executable software including instructions that, when executed, cause the controller/processor to perform various functions described herein. In some cases, the software may not be directly executable by the processor but may cause a computer (e.g., when compiled and executed) to perform functions described herein. The controller 56 may further be connected to codec circuitry 54 suitable for carrying out coding and decoding of audio and/or video data or assisting in coding and decoding carried out by the controller.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

The components, units and the functionalities described above may be considered to form a mobile equipment (ME). In addition, the apparatus may comprise a universal integrated circuit card (UICC; 46) for the insertion of at least one (U)SIM card 48. The UICC may comprise a CPU, ROM, RAM, EEPROM and I/O circuits, where the one or more of the memory units may comprise computer code stored thereon for various applications to be executed by the UICC.

An apparatus according to an aspect comprises means for obtaining a subscription permanent identifier for said apparatus in a primary authentication process; means for obtaining a root session key; means for generating an Authentication and Key Management for Applications (AKMA) key based on said root session key; means for generating a temporary identifier for the AKMA key at least partly based on a first routing indicator value obtained from a Unified Data Management (UDM) function; and means for initiating, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

According to an embodiment, the apparatus comprises means for setting an AKMA context used in the apparatus as invalid prior to initiating the re-registration process.

According to an embodiment, the apparatus comprises means for deleting the AKMA key and the temporary identifier for the AKMA key from the apparatus prior to initiating the re-registration process.

According to an embodiment, said apparatus is a User Equipment compliant with a mobile communication system.

According to an embodiment, the apparatus comprises a mobile equipment (ME) functionality and a universal integrated circuit card (UICC) for the insertion of at least one (U)SIM card.

The means as referred to herein and in related embodiments may comprise at least one processor; and at least one memory including computer program code, the at least one memory and computer program code configured to, with the at least one processor, cause the performance of the apparatus.

An apparatus according to a further aspect comprises at least one processor and at least one memory, said at least one memory stored with computer program code thereon, the at least one memory and the computer program code configured to, with the at least one processor, cause the apparatus at least to perform: obtain a subscription permanent identifier for said apparatus in a primary authentication process; means for obtaining a root session key; generate an Authentication and Key Management for Applications (AKMA) key based on said root session key; generate a temporary identifier for the AKMA key at least partly based on a first routing indicator value obtained from a Unified Data Management (UDM) function; and initiate, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

According to an embodiment, the apparatus comprises code causing the apparatus to set an AKMA context used in the apparatus as invalid prior to initiating the re-registration process.

According to an embodiment, the apparatus comprises code causing the apparatus to delete the AKMA key and the temporary identifier for the AKMA key from the apparatus prior to initiating the re-registration process.

According to an embodiment, said apparatus is a User Equipment compliant with a mobile communication system.

According to an embodiment, the apparatus comprises a mobile equipment (ME) functionality and a universal integrated circuit card (UICC) for the insertion of at least one (U)SIM card.

Such apparatuses may comprise e.g. the functional units disclosed in Figure 8 for implementing the embodiments.

A further aspect relates to a computer program product, stored on a non-transitory memory medium, comprising computer program code, which when executed by at least one processor, causes an apparatus at least to perform: obtain a subscription permanent identifier for said apparatus in a primary authentication process; means for obtaining a root session key; generate an Authentication and Key Management for Applications (AKMA) key based on said root session key; generate a temporary identifier for the AKMA key at least partly based on a first routing indicator value obtained from a Unified Data Management (UDM) function; and initiate, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
means for obtaining a subscription permanent identifier for said apparatus in a primary authentication process;
means for obtaining a root session key;
means for generating an Authentication and Key Management for Applications (AKMA) key based on said root session key;
means for generating a temporary identifier for the AKMA key at least partly based on a first routing indicator value obtained from a Unified Data Management (UDM) function; and
means for initiating, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

2. The apparatus according to claim 1, comprising
means for setting an AKMA context used in the apparatus as invalid prior to initiating the re-registration process.

3. The apparatus according to claim 1, comprising
means for deleting the AKMA key and the temporary identifier for the AKMA key from the apparatus prior to initiating the re-registration process.

4. The apparatus according to any preceding claim, wherein
said apparatus is a User Equipment compliant with a mobile communication system.

5. The apparatus according to claim 4, comprising
a mobile equipment (ME) functionality and a universal integrated circuit card (UICC) for the insertion of at least one (U)SIM card.

6. A method comprising:
obtaining, by a terminal apparatus, a subscription permanent identifier for said apparatus in a primary authentication process;
obtaining a root session key;
generating an Authentication and Key Management for Applications (AKMA) key based on said root session key;
generating a temporary identifier for the AKMA key at least partly based on a first routing indicator value obtained from a Unified Data Management (UDM) function; and
initiating, in response to receiving a request from the UDM function to update the temporary identifier for the AKMA key using a second routing indicator value without a request to re-register the temporary identifier for the AKMA key updated based on the second routing indicator value, a re-registration process of the temporary identifier for the AKMA key using at least said subscription permanent identifier and the second routing indicator value.

7. The method according to claim 6, comprising
setting an AKMA context used in the apparatus as invalid prior to initiating the re-registration process.

8. The method according to claim 1, comprising
means for deleting the AKMA key and the temporary identifier for the AKMA key from the apparatus prior to initiating the re-registration process.

9. The method according to any of claims 6-8, wherein
said apparatus is a User Equipment compliant with a mobile communication system.

10. The method according to claim 9, wherein said apparatus comprises
a mobile equipment (ME) functionality and a universal integrated circuit card (UICC) for the insertion of at least one (U)SIM card.
